# EUROPEAN PATENT APPLICATION

(11) **EP 4 703 096 A1**
(43) Date of publication of application: **04.03.2026**
(21) Application number: 24797022.1
(22) Date of filing: 23.04.2024
(51) Int. Cl.: B25J 13/08

(54) **ROBOT CONTROL DEVICE, ROBOT CONTROL SYSTEM, TRAINED MODEL, AND METHOD FOR GENERATING TRAINED MODEL**

(30) Priority: 25.04.2023 CN 202310461786
(71) Applicant: Kyocera Corporation, Kyoto-shi, Kyoto 612-8501 (JP); Rist Inc., Kyoto-shi, Kyoto 600-8102 (JP)
(72) Inventor: IZUMI, Tomoyuki, Kyoto-shi, Kyoto 612-8501 (JP); CHEN, Jian, Kyoto-shi, Kyoto 600-8102 (JP); KASHIWAGI, Tsunehiro, Kyoto-shi, Kyoto 600-8102 (JP); ISHI, Keiichiro, Kyoto-shi, Kyoto 600-8102 (JP); BAILLEHACHE, Pascal David, Kyoto-shi, Kyoto 600-8102 (JP); HORIKAWA, Yuto, Kyoto-shi, Kyoto 600-8102 (JP)
(74) Representative: TBK
(86) International application number: PCT/JP2024/015940
(87) International publication number: WO 2024/225276

(57) **Abstract**

A robot control apparatus includes an acquisition interface that acquires an image of a plurality of work targets of a robot, an estimator that estimates the visibility of each of the work targets based on the image, and a work target specifier that selects a specific work target to be held by the robot from among the plurality of work targets based on the visibility.

## Description

### CROSS REFERENCE TO RELATED APPLICATION

The present application claims priority to People's Republic of China Patent Application No. 202310461786.6 filed on April 25, 2023, the entire contents of which are incorporated herein by reference.

### TECHNICAL FIELD

The present disclosure relates to a robot control apparatus, a robot control system, a trained model, and a method of generating a trained model.

### BACKGROUND

Conventionally, a bulk picking device provided with an object recognition processing device is known. See, for example, Patent Literature (PTL) 1.

### CITATION LIST

### Patent Literature

PTL 1: JP 2010-120141 A

### SUMMARY

A robot control apparatus according to an embodiment of the present disclosure includes an acquisition interface, an estimator, and a work target specifier. The acquisition interface acquires an image of a plurality of work targets of a robot. The estimator estimates the visibility of each of the plurality of work targets based on the image. The work target specifier selects a specific work target for the robot from among the plurality of work targets based on the visibility.

A robot control system according to an embodiment of the present disclosure includes the robot control apparatus and a display apparatus. The display apparatus displays a score indicating a basis for selection of the specific work target selected by the robot control apparatus.

A trained model according to an embodiment of the present disclosure includes a feature extractor, a mask generator, and a visibility estimator. The feature extractor extracts features of each of the plurality of objects based on an image of the plurality of objects. The mask generator generates a plurality of masks respectively representing the plurality of objects, based on the features of each of the plurality of objects. The visibility estimator estimates the visibility of each of the plurality of objects based on the plurality of masks.

A method of generating a trained model according to an embodiment of the present disclosure includes performing learning to generate a trained model that estimates a visibility of a body appearing in an inference image when the inference image is input, based on training data including a plurality of training images of objects.

### BRIEF DESCRIPTION OF THE DRAWINGS

In the accompanying drawings:
FIG. 1 is a block diagram illustrating an example of the configuration of a robot control system according to an embodiment;
FIG. 2 is a schematic diagram illustrating an example of the configuration of a robot control system according to an embodiment;
FIG. 3 is a block diagram illustrating an example configuration of a trained model that generates masks and estimates the visibility of the masks;
FIG. 4A is a diagram illustrating an example of an image to be input to a trained model;
FIG. 4B is a diagram illustrating an example of a bounding box generated for each body in FIG. 4A;
FIG. 4C is a diagram illustrating an example of a mask generated for each body in FIG. 4A;
FIG. 5 is an enlarged view of the framed area A in FIG. 4A;
FIG. 6 is a diagram illustrating the size of a mask image used to generate a synthetic image or annotation data used as a training image;
FIG. 7 is a diagram illustrating an example of an image of work targets;
FIG. 8 is a diagram illustrating an image obtained by cutting out the framed area B in FIG. 7;
FIG. 9 is a flowchart illustrating an example of procedures in a method of generating a trained model;
FIG. 10 is a flowchart illustrating an example of procedures in a robot control method;
FIG. 11 is a graph illustrating the area distribution of masks; and
FIG. 12 is a diagram illustrating an example of a histogram of mask sizes.

### DETAILED DESCRIPTION

A robot control system 1 according to an embodiment of the present disclosure can select a specific work target to be held by a robot based on the visibility of each body that is a work target.

The visibility of a body is the ratio of the area of the part of an actual image in which the body appears to the area of the body if the entire body were to appear in the image. For example, when a body overlaps another body and a part of the body is hidden by the other body, the area of the part of the body that appears in the image becomes smaller. In this case, the visibility of the body is the ratio of the area of the part of the actual image that is not obscured by other bodies to the area that would appear in the image if the body were not obscured by other bodies. Furthermore, when a body is located at the edge of the camera's angle of view and is cut off from the image, the area of the body captured in the image becomes smaller. In this case, the visibility of the body is the ratio of the area of the part of the actual image that is not cut off to the area that would appear in the image if the body were not obscured by other bodies.

The lower the visibility of a body in an image captured by the robot, the greater the area in which the body is hidden by other bodies from the robot's perspective. In other words, the body is located further back than other bodies from the robot's perspective. When the robot is to hold a body as a work target, it is more likely to fail to hold a body located at the back of a plurality of overlapping bodies than to hold a body located at the front.

Therefore, by specifying the work target to be held by the robot taking into consideration the visibility of bodies, the present disclosure can reduce the risk of failure of a robot to hold a work target. Specific embodiments will be described below.

### (Configuration example of robot control system 1)

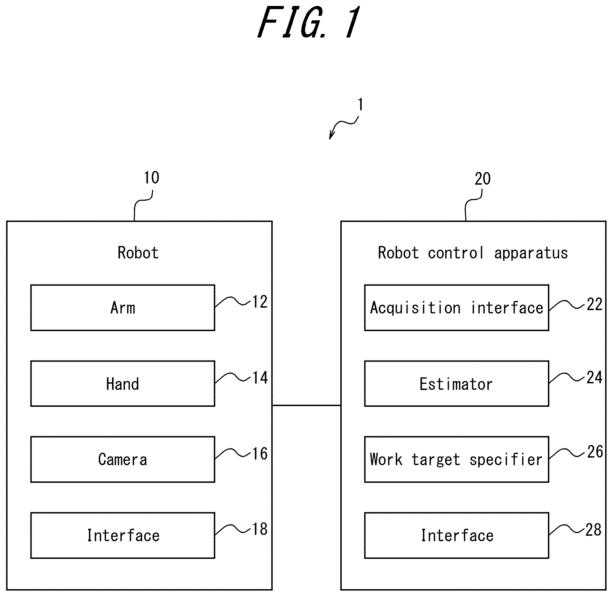

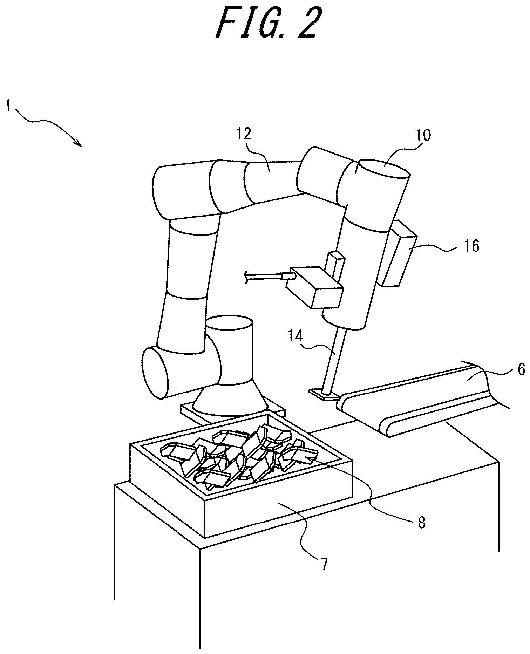

As illustrated in FIGS. 1 and 2, a robot control system 1 according to an embodiment of the present disclosure includes a robot 10 and a robot control apparatus 20. In the robot control system 1, the robot control apparatus 20 controls the robot 10 so that the robot 10 holds the work target 8 and moves from a source 7 to a destination 6. In the example of FIG. 2, the work target 8 is an industrial part. The source 7 is assumed to be a tray containing industrial parts. The destination 6 is assumed to be a conveyor that transports industrial parts. The work target 8 is not limited to the body illustrated as an example, but may be various other bodies. The source 7 or destination 6 is not limited to the locations illustrated in the example and may be various other locations.

### <Robot 10>

As illustrated in FIGS. 1 and 2, the robot 10 includes an arm 12, a hand 14, a camera 16, and an interface 18.

The arm 12 is configured to include joints and links. The arm 12 may be configured as, for example, a six-axis or seven-axis vertical articulated robot. The arm 12 may be configured as a three-axis or four-axis horizontal articulated robot or a SCARA robot. The arm 12 may be configured as a two-axis or three-axis Cartesian robot. The arm 12 may be configured as a parallel link robot or the like. The number of shafts constituting the arm 12 is not limited to the illustrated example.

The hand 14 is attached to the tip of the arm 12 or at a predetermined position. The hand 14 may include a suction hand configured to be able to suction up the work target 8. The suction hand may have one or more suction portions. The hand 14 may include a gripping hand configured to be able to grip the work target 8. The gripping hand may have a plurality of fingers. The number of fingers on the gripping hand may be two or more. The fingers of the grasping hand may have one or more joints. The hand 14 may include a scooping hand configured to be able to scoop up the work target 8.

The robot 10 can control the position and orientation of the hand 14 by operating the arm 12. The posture of the hand 14 may be represented by an angle that specifies the direction in which the hand 14 acts on the work target 8. The orientation of the hand 14 is not limited to an angle and may be expressed in various other ways, such as a spatial vector. The direction in which the hand 14 acts on the work target 8 may be, for example, the direction in which the hand 14 approaches the work target 8 when suctioning and holding the work target 8, or the direction in which the hand 14 suctions the work target 8. The direction in which the hand 14 acts on the work target 8 may be the direction in which the hand 14 approaches the work target 8 when grasping the work target 8 with multiple fingers, or may be the direction in which the hand 14 grasps the work target 8. The direction in which the hand 14 acts on the work target 8 is not limited to these examples and may be various directions.

The robot 10 may further include a sensor that detects the state of the arm 12 including joints or links, or the state of the hand 14. The sensor may detect information relating to the actual position or orientation of the arm 12 or hand 14, or the velocity or acceleration of the arm 12 or hand 14, as the state of the arm 12 or hand 14. The sensor may detect a force acting on the arm 12 or the hand 14. The sensor may detect the current flowing in a motor that drives a joint or detect the torque of the motor. The sensor can detect information obtained as a result of the actual movement of the robot 10. The robot control apparatus 20 can know the results of the actual operation of the robot 10 by acquiring the detection results from the sensors.

The camera 16 may be configured to be capable of capturing RGB images and may also be configured to be capable of acquiring depth data. The robot 10 can control the position and orientation of the camera 16 by operating the arm 12. The orientation of the camera 16 may be represented by an angle that specifies the direction in which the camera 16 captures images. The orientation of the camera 16 is not limited to an angle and may be expressed in various other ways, such as a spatial vector. The camera 16 outputs, to the robot control apparatus 20, an image captured at a position and orientation determined by the operation of the robot 10.

The camera 16 may be configured to be capable of outputting a RAW image, which may be later converted into RGB data by the robot control apparatus 20. The camera 16 may also be, for example, an infrared camera. In this case, for example, when handling fruit as the work target 8, the work target 8 can be selected by determining when the fruit is ripe to eat, or when handling beverages as the work target 8, the work target 8 can be selected based on the amount of mineral components contained in the beverage.

The interface 18 may be configured to include a communication device that communicates with the robot control apparatus 20 via wired or wireless communication. The communication device may be configured to be capable of communicating based on a LAN (Local Area Network) or a WAN (Wide Area Network), or various communication standards such as RS-232C or RS-485. The interface 18 may obtain information for controlling the arm 12, the hand 14, or the camera 16 from the robot control apparatus 20. The interface 18 may output, to the robot control apparatus 20, the detection results of the state of the arm 12 or the hand 14, images or depth data captured by the camera 16, and the like.

### <Robot control apparatus 20>

As illustrated in FIG. 1, the robot control apparatus 20 includes an acquisition interface 22, an estimator 24, a work target specifier 26, and an interface 28.

The acquisition interface 22 acquires information outputted from the robot 10. The acquisition interface 22 acquires an image of the work target 8 captured by the camera 16 of the robot 10. It is assumed that the image of the work target 8 includes a plurality of work targets 8. The acquisition interface 22 may be configured to include a communication interface.

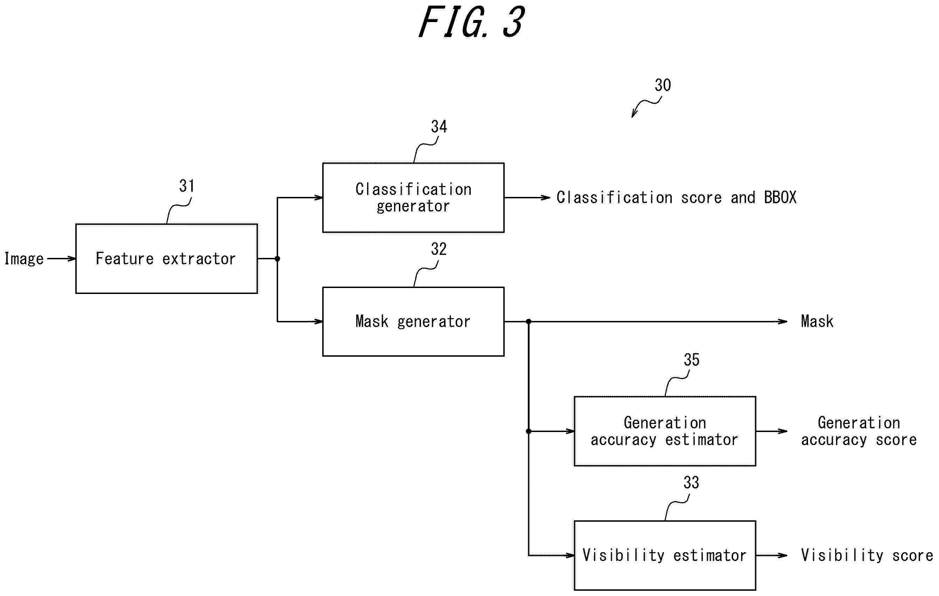

The estimator 24 estimates the visibility of each of the plurality of work targets 8 based on the image of the plurality of work targets 8 acquired from the robot 10. The visibility is the ratio of the area of a body that is visible without being hidden by another body to the area of the body if the body were captured in its entirety in an image of the body. If the entire body is visible in the image, the visibility of the body is 100%. As will be described later, the estimator 24 may estimate the visibility using a trained model 30 (see FIG. 3) or may estimate the visibility based on various other algorithms.

The work target specifier 26 selects a specific work target to be held by the hand 14 of the robot 10 from among the plurality of work targets 8 based on the visibility estimated by the estimator 24. The specified work target is the work target 8 that has been specified as the body to be held next by the hand 14 of the robot 10.

The estimator 24 or the work target specifier 26 may be configured to include at least one processor. The estimator 24 and the work target specifier 26 may be realized as functions of a single processor. The estimator 24 and the work target specifier 26 may be realized as functions of different processors. The processor may execute a program that realizes the functions of the estimator 24 or the work target specifier 26. The processor may be implemented as a single integrated circuit. An integrated circuit is also called an IC. The processor may be implemented as a plurality of communicatively coupled integrated circuits and discrete circuits. The processor may include a CPU (Central Processing Unit). The processor may be configured to include a DSP (Digital Signal Processor) or a GPU (Graphics Processing Unit). The processor may be implemented based on various other known technologies.

The robot control apparatus 20 may further include a memory. The memory may be configured to include an electromagnetic storage medium such as a magnetic disk or may be configured to include a memory such as a semiconductor memory or a magnetic memory. The memory may be configured as a hard disk drive (HDD) or a solid state drive (SSD). The memory stores various types of information and programs executed by the processor. The memory may function as a working memory for the processor. At least a portion of the memory may be included in the processor. At least a part of the memory may be configured as a storage device separate from the robot control apparatus 20.

The interface 28 may be configured to include a communication device configured to be capable of communicating via wired or wireless communication. The communication device may be configured to be capable of communicating based on various communication standards.

The interface 28 may include an input device and an output device. The input device can receive input from, for example, the user of the robot 10. The input device may be configured to include, for example, a touch panel or a touch sensor, or a pointing device such as a mouse. The input device may be configured to include physical keys. The input device may be configured to include an audio input device such as a microphone. The input device is not limited to these examples and may be configured to include various other devices.

The output device may be configured to include a display device. The output device may display, for example, the work results of the robot 10, the estimation results of the estimator 24, the specification results of the work target specifier 26, or the like to the user. The display device may be configured to include, for example, a liquid crystal display (LCD), an organic electroluminescence (EL) display, an inorganic EL display, or a plasma display panel (PDP). The display device is not limited to these displays and may be configured to include displays based on various other methods. The display device may be configured to include a light emitting device such as an LED (Light Emitting Diode). The display device may be configured to include various other devices. The output device may be configured to include an audio output device such as a speaker that outputs auditory information such as voice. The output device is not limited to these examples and may include various other devices.

In the configuration illustrated in FIG. 1, one robot control apparatus 20 is connected to one robot 10. One robot control apparatus 20 may be connected to two or more robots 10. One robot control apparatus 20 may control only one robot 10 or may control two or more robots 10. The number of robot control apparatuses 20 and robots 10 is not limited to one and may be two or more.

The robot control apparatus 20 may be configured to include one or more servers. The robot control apparatus 20 may be configured to cause a plurality of servers to execute parallel processing. The robot control apparatus 20 does not need to be configured to include a physical housing and may be configured based on virtualization technology such as a virtual machine or container orchestration system. The robot control apparatus 20 may be configured using a cloud service. In a case of configuration using a cloud service, the robot control apparatus 20 can be configured by combining managed services. In other words, the functions of the robot control apparatus 20 can be realized as a cloud service.

The robot control apparatus 20 may include at least one server group and at least one database group. The server group functions as the estimator 24 or the work target specifier 26. The database group functions as a memory. The number of server groups may be one or may be two or more. When the number of server groups is one, the functions realized by one server group include the functions realized by each server group. The server groups are connected to each other so that they can communicate with each other via wired or wireless communication. The number of database groups may be one or may be two or more. The number of database groups may be increased or decreased as appropriate based on the amount of data managed by the robot control apparatus 20 and the availability requirements for the robot control apparatus 20. The database group is communicably connected to each server group via wired or wireless communication. The robot control apparatus 20 may be connected to an external database. An information processing system that includes the robot control apparatus 20 and an external database may be configured.

Although the robot control apparatus 20 is illustrated as a single configuration in FIG. 1, a plurality of configurations can be operated as a single system as needed. In other words, the robot control apparatus 20 is configured as a platform with a variable capacity. By using a plurality of configurations as the robot control apparatus 20, even if one configuration becomes inoperable due to an unforeseen event such as a natural disaster, the operation of the system can continue using the other configurations. In this case, the configurations are connected, whether by a wired or wireless connection, and are capable of communicating with each other. This plurality of configurations may be constructed across cloud services and on-premise environments.

Furthermore, the robot control apparatus 20 is communicably connected to at least one configuration of the robot control system 1 via wired or wireless connection. The robot control apparatus 20 and at least one configuration of the robot control system 1 are provided with an interface that uses a mutually standard protocol, allowing two-way communication.

### (Example of operation of robot control system 1)

In the robot control system 1, the robot control apparatus 20 selects a specific work target to be specified as the work target 8 to be held, based on an image of the work target 8 captured by the camera 16 of the robot 10, and controls the robot 10 so that the hand 14 of the robot 10 holds the specific work target.

Specifically, the acquisition interface 22 of the robot control apparatus 20 acquires an image of a plurality of work targets 8 of the robot 10. The estimator 24 of the robot control apparatus 20 estimates the visibility of each of the plurality of work targets 8 based on the acquired image. The work target specifier 26 of the robot control apparatus 20 selects a specific work target to be held by the hand 14 of the robot 10 from among the plurality of work targets 8 based on the estimated visibility of the work targets 8. As described above, the visibility of a body is the ratio of the area of the part of an actual image in which the body appears to the area of the body if the entire body were to appear in the image.

The robot 10 can more easily hold a work target 8 that is not hidden by other bodies and is entirely visible than a work target 8 that is hidden by another body and is only partially visible. The robot 10 can also more easily hold a work target 8 that is overlapped little by other bodies than a work target 8 that is overlapped by other bodies. The robot 10 can also more easily hold a work target 8 that is within the angle of view of the camera 16 of the robot 10 than a work target 8 that is located at the edge of the angle of view and is cut off by the image. Therefore, the work target specifier 26 may select a work target 8 with high visibility as the specific work target.

The estimator 24 may classify the work targets 8 by type or by individual work target based on the image of the work targets 8. The estimator 24 may estimate the classification degree of each of the classified work targets 8. In other words, the estimator 24 may be able to estimate the classification degree of each of plurality of work targets 8 from an image of the work targets 8. The classification degree is an index that indicates the degree of classification accuracy of the work target 8. The classification accuracy may be expressed as a confidence level or likelihood of classification of the work target 8.

The work target specifier 26 may select a specific work target from among the plurality of work targets 8 based on the visibility and classification degree of each of the plurality of work targets 8.

The estimator 24 may generate a mask for each of the plurality of work targets 8 based on the image of the plurality of work targets 8. The estimator 24 may estimate the visibility of each of the plurality of work targets 8 based on the mask of each of the plurality of work targets 8. The estimator 24 may also estimate the accuracy with which the mask is generated. In other words, the estimator 24 may be able to estimate the mask generation accuracy. The accuracy of mask generation corresponds to the degree of overlap between the mask generated by the estimator 24 and the correct mask. In other words, the closer the mask generated by the estimator 24 is to the correct mask, the higher the mask generation accuracy. The estimator 24 may calculate the matching rate between the generated mask and the correct mask as the mask generation accuracy.

The work target specifier 26 may select a specific work target from among the plurality of work targets 8 based on the visibility and the mask generation accuracy for each of the plurality of work targets 8.

The estimator 24 may estimate height information for each of the plurality of work targets 8 from an image of the work targets 8. In other words, the estimator 24 may be able to estimate the height information for each of plurality of work targets 8 from an image of the work targets 8. The height information may be expressed as the distance from the camera 16 of the robot 10 to the work target 8 as viewed from the camera 16.

The estimator 24 may estimate the height information based on the area of each of the plurality of work targets 8 included in an image of the work targets 8. The estimator 24 may estimate the height information of the work targets 8 by assuming that a work target 8 having a larger area is located in the foreground. The acquisition interface 22 may acquire depth data from the camera 16 of the robot 10. The estimator 24 may estimate height information of the work target 8 based on the depth data.

The work target specifier 26 may select a specific work target from among the plurality of work targets 8 based on the visibility and height information of each of the plurality of work targets 8. The robot 10 can more easily hold a work target 8 that is located closer than a work target 8 that is located farther away. The work target specifier 26 may select a work target 8 that is located nearby from among the plurality of work targets 8 as the specific work target based on the height information.

From among the plurality of work targets 8 in the image, the work target specifier 26 may select a specific work target that is located toward the center of the image.

### (Trained model 30)

As described above, the estimator 24 of the robot control apparatus 20 may estimate the visibility of the work target 8 illustrated in the image using the trained model 30. The trained model 30 is, for example, AI (artificial intelligence). The trained model 30 is generated by performing predetermined machine learning on a pre-training model. The predetermined machine learning may be, for example, deep learning. Note that the pre-training model is an AI model that is not yet capable of inferring the item to be inferred. For example, in a case in which the trained model 30 estimates the visibility of the work target 8, the pre-training model refers to an AI model that is not yet capable of estimating the visibility of the work target 8, and includes, for example, an AI model that has not undergone training processing or an AI model that has undergone training processing to be capable of inferring something other than visibility. In the present disclosure, an example will be described in which the estimator 24 is AI, but the estimator 24 may be realized by a template matching technique, or may be realized by using AI and template matching in combination.

The estimator 24 inputs an inference image into the trained model 30. The inference image is an image from which the work target 8 to be held by the robot 10 is extracted for estimation of visibility. The estimator 24 estimates the visibility of the work target 8 in the inference image. In other words, the trained model 30 estimates the visibility of a body appearing in an inference image when the inference image is input.

As illustrated in FIG. 3, the trained model 30 may include a feature extractor 31, a mask generator 32, a visibility estimator 33, a classification generator 34, and a generation accuracy estimator 35. The trained model 30 need not include the classification generator 34. The trained model 30 need not include the generation accuracy estimator 35.

The trained model 30 may be configured to include a CNN (Convolutional Neural Network) or an R-CNN having a plurality of layers. Convolution processing based on predetermined weighting coefficients is performed on the information inputted to the trained model in each layer of the CNN. During learning of the trained model, the weighting coefficients are updated. The trained model may be configured to include a fully connected layer. The trained model may be constructed by VGG16 or ResNet50. The trained model may be configured as a transformer. The trained model 30 may be configured to perform processing on the input image at the pixel level. The trained model 30 may have a configuration that combines various backbones and heads. The trained model 30 may have a configuration in which a new backbone or head is added to another AI model. The trained model is not limited to these examples and may be configured to include various other models.

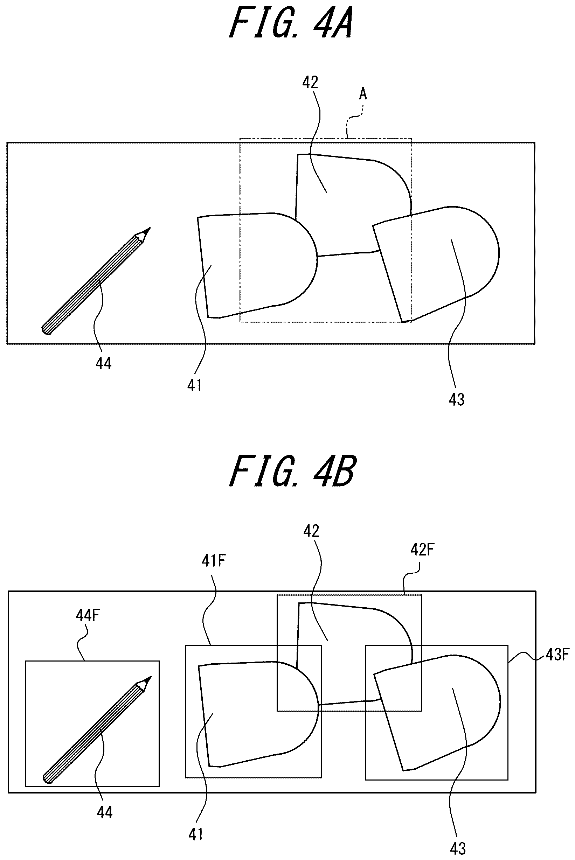

The operation of each component of the trained model 30 will be explained below. In the following description, it is assumed that the image input to the trained model 30 is an image illustrating recognition targets 41 to 44, as exemplified in FIG. 4A. It is assumed that the recognition targets 41 to 43 are parts corresponding to work targets 8. The recognition target 44 is assumed to be a pencil that does not correspond to a work target 8.

### <Feature extractor 31>

As illustrated in FIG. 4B, the feature extractor 31 extracts features of bodies in an image and converts them into a region of interest (ROI). In other words, the feature extractor 31 extracts the features of each of a plurality of objects based on an image of the plurality of objects. The feature extractor 31 outputs the region of interest of the bodies in the image to the mask generator 32 and the classification generator 34.

The feature extractor 31 extracts features of the recognition target 41 corresponding to a work target 8 and converts them into a region of interest of the recognition target 41 surrounded by a bounding box 41F. The feature extractor 31 extracts features of the recognition target 42 corresponding to a work target 8 and converts them into a region of interest of the recognition target 42 surrounded by a bounding box 42F. The feature extractor 31 extracts features of the recognition target 43 corresponding to a work target 8 and converts them into a region of interest of the recognition target 43 surrounded by a bounding box 43F. The feature extractor 31 extracts features of the recognition target 44 that does not correspond to a work target 8 and converts them into a region of interest of the recognition target 44 surrounded by a bounding box 44F. In the present embodiment, the bounding boxes 41F to 44F are generated by the classification generator 34, which will be described later. The feature extractor 31 may generate the bounding boxes 41F to 44F.

### <Mask generator 32>

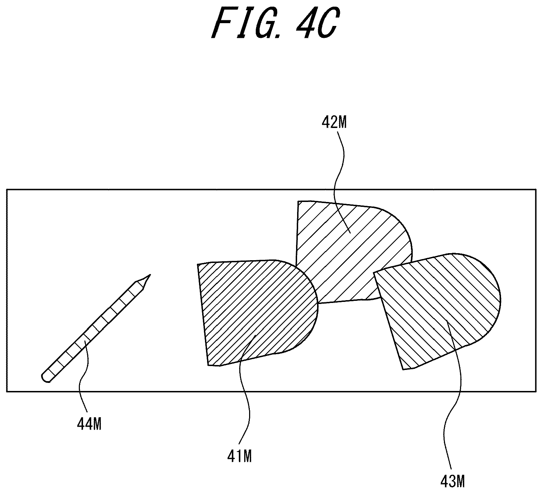

The mask generator 32 generates masks of the bodies in the image, as illustrated in FIG. 4C, based on the regions of interest outputted from the feature extractor 31. In other words, the mask generator 32 generates a plurality of masks respectively representing the plurality of objects, based on the features of each of the plurality of objects.

The mask generator 32 sets the generated masks as the output of the trained model 30. The mask generator 32 also outputs the generated mask to the visibility estimator 33 and the generation accuracy estimator 35.

In FIG. 4C, a mask is generated for each individual body rather than for each type of body. That is, each of the recognition targets 41 to 43 corresponding to a work target 8 is distinguished as an individual part corresponding to a work target 8. The mask 41M is a mask of the recognition target 41 corresponding to a work target 8. The mask 42M is a mask of the recognition target 42 corresponding to a work target 8. The mask 43M is a mask of the recognition target 43 corresponding to a work target 8. The mask 44M is a mask of the recognition target 44 that does not correspond to a work target 8.

### <Visibility estimator 33>

The visibility estimator 33 estimates the visibility of the bodies corresponding to the masks generated by the mask generator 32. In other words, the visibility estimator 33 estimates the visibility of each of the plurality of objects based on the plurality of masks.

The visibility estimator 33 sets the visibility scores as the output of the trained model 30. The visibility score is an index that indicates the degree of visibility of the body corresponding to the mask. The visibility estimator 33 may output the value of the visibility of the body corresponding to the mask as the visibility score. The visibility estimator 33 may output a value according to the level of visibility of the body corresponding to the mask as the visibility score. As described above, the visibility of a body is the ratio of the area of the part of the actual image that is not obscured by another body to the area that would appear in the image if the body were not obscured by other bodies, at a certain image capturing viewpoint.

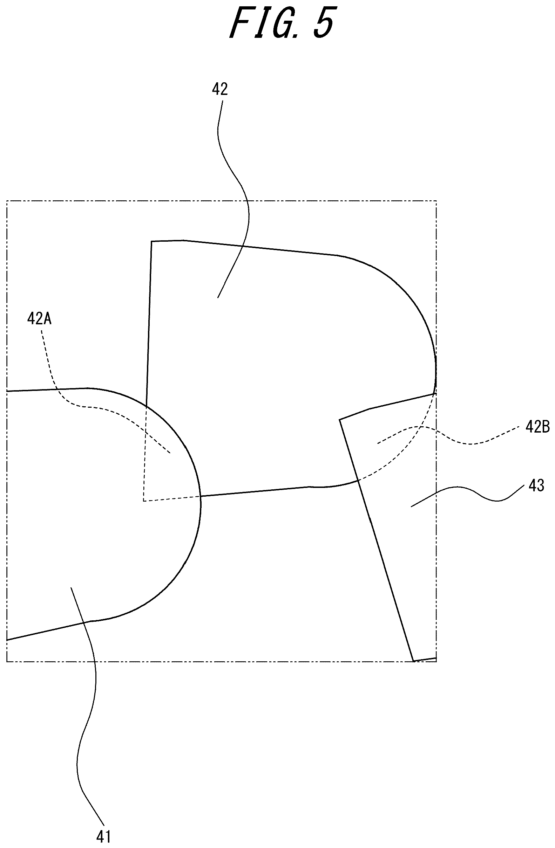

The visibility estimator 33 may estimate the visibility of the mask of each body based on the generation result of the mask of each body illustrated in FIG. 4C. As illustrated in FIG. 5, in the image of the recognition target 42, a part of the recognition target 42 is hidden by the recognition targets 41 and 43. Specifically, the recognition target 42 includes a portion 42A hidden behind the recognition target 41 and a portion 42B hidden behind the recognition target 43. Therefore, the mask 42M of the recognition target 42 (see FIG. 4C) is not a mask that represents the full view of the recognition target 42.

The visibility estimator 33 estimates the areas of the portions 42A and 42B of the recognition target 42 that are hidden by the other recognition targets 41 and 43. The visibility estimator 33 calculates the area of the portion of the recognition target 42 that is not hidden by the other recognition targets 41 and 43 and appears in the image. The visibility estimator 33 calculates the area in the case of the full view of the recognition target 42 being captured in the image as the sum of the area of the portions 42A and 42B of the recognition target 42 that are hidden by the other recognition targets 41 and 43 and the area of the portion of the recognition target 42 that is not hidden by the other recognition targets 41 and 43 and appears in the image. The visibility estimator 33 can estimate the visibility by dividing the area of the portion of the recognition target 42 that is not hidden by the other recognition targets 41 and 43 and appears in the image by the area in the case in which the full view of the recognition target 42 appears in the image.

### <Classification generator 34>

The classification generator 34 determines the class into which a body is classified based on the region of interest of the body as outputted from the feature extractor 31. In other words, the classification generator 34 classifies bodies into classes. The region of interest of the body is classified into classes that specify the type of body, such as a part that corresponds to a work target 8 or a pencil that does not correspond to a work target 8. The regions of interest of the bodies are classified into classes that specify attributes other than the body that is the recognition target, such as the background. In other words, the classification generator 34 classifies each of the plurality of objects into a respective plurality of classes based on the features of the bodies.

In a case in which a body can be classified into a plurality of classes each specifying a specific type, the classification generator 34 may calculate the probability that the body will be classified into each class. The classification generator 34 may classify the body into the class with the highest probability. The classification generator 34 may calculate the classification accuracy of the body. The classification accuracy of a body may be expressed as the probability that the body will be classified into the class as classified by the classification generator 34.

The classification generator 34 sets a classification score corresponding to the above-described classification degree as the output of the trained model 30. The classification score is an index that indicates the level of certainty (degree of certainty) of the classification of a body. In addition to the degree of certainty, the classification generator 34 may output a numerical value (likelihood) representing the likelihood as the classification score. The classification generator 34 may output the degree of certainty of the body itself as the classification score. The classification generator 34 may output a value according to the degree of certainty of the body as the classification score.

The classification generator 34 may perform learning on the bounding box corresponding to the region of interest for each body in the image. As a result, the classification generator 34 may set the bounding boxes as the output of the trained model 30.

### <Generation accuracy estimator 35>

The generation accuracy estimator 35 estimates the generation accuracy of the masks generated by the mask generator 32. In other words, the generation accuracy estimator 35 estimates the generation accuracy of each of the plurality of masks based on the plurality of masks. As described above, the accuracy of mask generation corresponds to the degree of overlap between the mask generated by the mask generator 32 and the correct mask. In other words, the closer the mask generated by the mask generator 32 is to the correct mask, the higher the accuracy of mask generation. The generation accuracy estimator 35 sets the generation accuracy score as the output of the trained model 30. The generation accuracy score is an index that indicates the level of accuracy of mask generation. The generation accuracy estimator 35 may output the matching rate between the mask generated by the mask generator 32 and the correct mask as a generation accuracy score.

### <Other blocks>

The trained model 30 may include an area calculator that calculates the area of each of a plurality of objects included in an image of the objects. The area calculator may be able to calculate the area, on the image, of each of a plurality of objects based on the image of the objects. The area calculator may be located after the mask generator 32 and calculate the area of the objects based on the masks generated by the mask generator 32. The area calculator may be located after the feature extractor 31 and in parallel with the mask generator 32 and calculate the area of the objects based on the regions of interest corresponding to the features extracted by the feature extractor 31. The area calculator may calculate the area by, for example, counting the number of pixels in the generated mask.

The trained model 30 may include a height estimator that estimates height information for each of a plurality of objects from an image of the objects. The height estimator may be able to estimate height information for each of the plurality of objects from the image of the objects. The height information may be expressed as the distance from the camera capturing the object to the object. The height estimator may be located after the area calculator and estimate height information for the object based on the area of the object. The height estimator may be located after the mask generator 32 and estimate the height information for the object based on the mask generated by the mask generator 32 and depth data. The height estimator may be located after the feature extractor 31 and estimate height information for the object based on the region of interest corresponding to the features extracted by the feature extractor 31 and the depth data.

### <Generation of trained model 30>

The trained model 30 is generated by performing learning based on training data including a plurality of training images of objects. The learning for generating the trained model 30 may be performed by an external device or by the robot control apparatus 20. In the present embodiment, the learning for generating the trained model 30 is performed by a training apparatus. The training apparatus may include an external device, the robot control apparatus 20, or the like. The training apparatus may include a processor, a memory, an interface, or the like.

As the training images, images of actual objects may be used. Synthetic images may be used as the training images. A synthetic image is, for example, an image generated based on data that virtually models the appearance of an object. In the present embodiment, it is assumed that synthetic images are used as the training images.

The training data may include annotation data associated with the training images. When generating the visibility estimator 33, the training apparatus acquires the percentage, of the part of the entire image of the object, that is visible in the synthetic image as annotation data. The training apparatus may calculate the percentage of the part of the entire image of the object that is visible in the synthetic image, based on the image of the object included in the synthetic image. The training apparatus may associate the calculated percentage with the synthetic image as annotation data.

The training apparatus may estimate the part of an object that is hidden by another body based on the image of the object contained in the synthetic image and calculate the percentage, in the entire image of the object, of the part of the object that is hidden by another body. The training apparatus may associate the calculated percentage with the synthetic image as annotation data.

If the object does not fit within the angle of view of the synthetic image, the image of the object may be cut off at the edge of the synthetic image. The training apparatus may estimate the portion of the object that extends beyond the angle of view of the synthetic image, based on the image of the object contained in the synthetic image, and calculate the percentage, in the entire image of the object, of the part of the object that extends beyond the angle of view of the synthetic image. The training apparatus may associate the calculated percentage with the synthetic image as annotation data. The angle of view of the synthetic image corresponds to the angle of view of the camera 16.

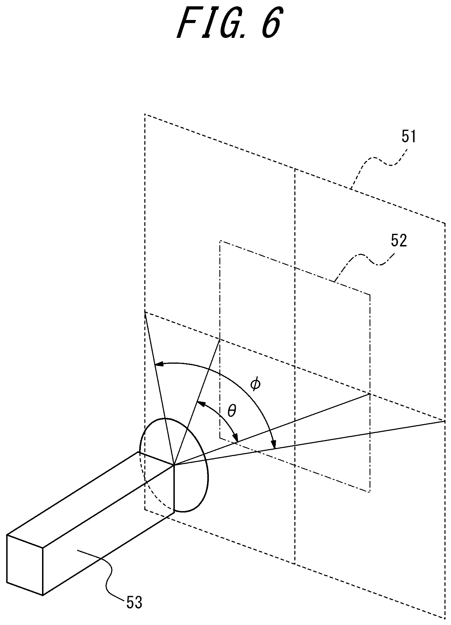

The portion of the image of the object that extends beyond the angle of view of the synthetic image can be identified by generating another image with a wider angle of view than the synthetic image. Specifically, the training apparatus may generate a base synthetic image that extends over a range 51 indicated by a dashed rectangle, as illustrated in FIG. 6, and acquire an extracted synthetic image cut out from the base synthetic image over a range 52 indicated by a dashed-dotted rectangle. The base synthetic image is an image in which objects, modeled using 3DCG (3-Dimensional Computer Graphics) technology based on, for example, CAD (Computer Aided Design) data of the objects, are randomly overlapped within a specific range 51. Assuming that images are captured by the camera 16 (virtual camera 53), the extracted synthetic image is an image yielded by cutting out a portion of the plurality of objects, spread across the specific range 51, from the base synthetic image by using a narrower angle of view (range 52) of the camera 16 than the specific range 51. The base synthetic image is, for example, about two to three times larger than the extracted synthetic image and has a sufficiently large angle of view to encompass all of the objects that extend beyond the angle of view of the extracted synthetic image.

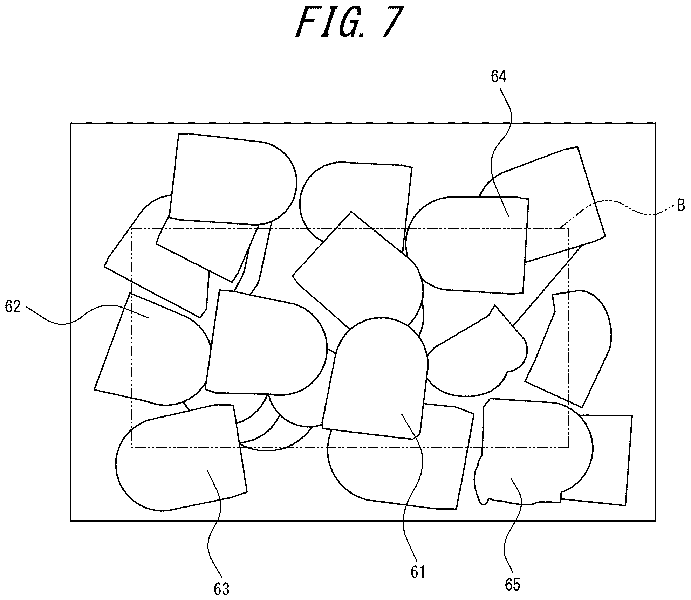

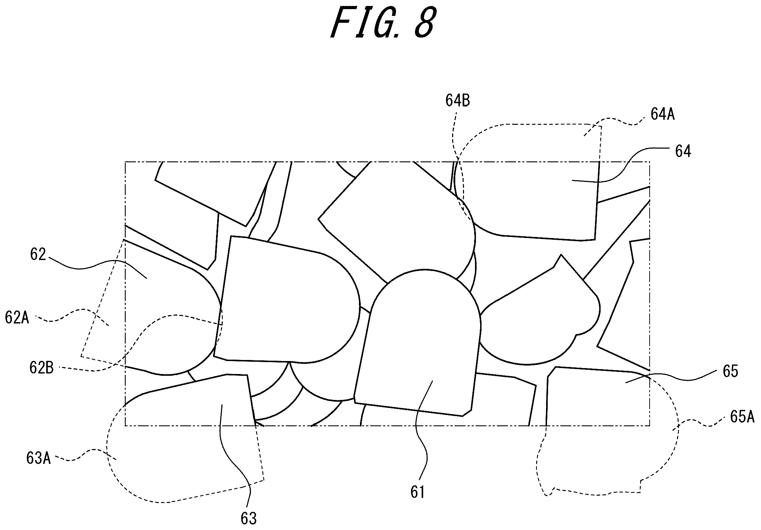

Specifically, it is assumed that the image illustrated in FIG. 7 is generated as the base synthetic image. Also, it is assumed that the image illustrated in FIG. 8 is generated by cutting out the portion enclosed by the dashed-dotted rectangular frame indicated by B of FIG. 7 as an extracted synthetic image. In FIGS. 7 and 8, it is assumed that recognition targets 61 to 65, which are industrial parts, are visible. In FIG. 8, the entire image of the recognition target 61 is included in the extracted synthetic image. The image of the recognition target 62 includes a portion 62A that is cut off from the extracted synthetic image and a portion 62B that is hidden by another body. The image of the recognition target 63 includes a portion 63A that is cut off from the extracted synthetic image. The image of the recognition target 64 includes a portion 64A that is cut off from the extracted synthetic image and a portion 64B that is hidden by another body. The image of the recognition target 65 includes a portion 65A that is cut off from the extracted synthetic image.

The training apparatus can acquire the area of the entire image of the recognition targets 63 and 65 from each first mask image of each object that is rendered based on three-dimensional modeling data of the plurality of objects so that the plurality of objects are arranged in the same manner as in the base synthetic image. The training apparatus can also calculate the area of the portions 63A and 65A that are cut out of the extracted synthetic image from each first mask image and from each second mask image rendered so that the plurality of objects are arranged in the same manner as in the extracted synthetic image, for example. Specifically, first, a first mask image of each object is generated so as to reproduce the arrangement of the plurality of objects in the base synthetic image. At this time, each first mask image of each object is generated in a state of not being cut off. Next, a respective second mask image of each object is generated to replicate the arrangement of the plurality of objects in the extracted synthetic image. At this time, each second mask image of each object is generated with cut-off portions missing. Therefore, by calculating the area of each first mask image and each second mask image of each object, the training apparatus can calculate, for the recognition targets 63 and 65, the percentage, in the entire image of the object, of the part of the object that extends beyond the angle of view of the extracted synthetic image. Specifically, based on each first mask image and each second mask image, the training apparatus may calculate the area of object X1, which partially appears in the extracted synthetic image and which extends beyond the angle of view of the extracted synthetic image, and the area of the object X1 in the base synthetic image, and calculate the percentage, in the entire image of object X1, of the part of the object X1 that is cut off from the extracted synthetic image. Conversely, the training apparatus may calculate the percentage, in the entire image of the object X1, of the part that appears in the extracted synthetic image without being cut off from the extracted synthetic image. The training apparatus may associate the calculated percentages with the recognition targets 62 and 64 as annotation data.

The training apparatus can calculate the areas of the portions 62A and 64A, of the recognition targets 62 and 64, that are cut off from the extracted synthetic image in the same manner as for the recognition targets 63 and 65. The training apparatus may also estimate the area of the portions 62B and 64B, of the recognition targets 62 and 64, that are hidden by another body from a first mask image of each object, rendered so that the plurality of objects are arranged in the same manner as in the base synthetic image, and a second mask image of each object, rendered so that the plurality of objects are arranged in the same manner as in the extracted synthetic image, based on three-dimensional modeling data of the plurality of objects, for example. Specifically, first, a first mask image of each object is generated so as to reproduce the arrangement of the plurality of objects in the base synthetic image. The first mask images of the objects thus generated are generated so as not to be hidden by other bodies. Next, a respective second mask image of each object is generated to replicate the arrangement of the plurality of objects in the extracted synthetic image. At this time, each second mask image of each object is generated in a state such that portions that overlap with another body are missing. Therefore, by calculating and comparing the area of each first mask image and each second mask image of each object, the training apparatus can calculate, for the recognition targets 62 and 64, the percentage of the object that is hidden by another body in the entire image of the object. Therefore, for the recognition targets 62 and 64, the training apparatus may estimate the percentage of the part that extends beyond the angle of view of the extracted synthetic image and the percentage of the part that is hidden by another body in the entire image of the object. The training apparatus may associate the estimated percentages with the recognition targets 62 and 64 as annotation data.

The training apparatus can calculate the areas of the portions 62B and 64B of the recognition targets 62 and 64 that are hidden by another body in the extracted synthetic image based on each first mask image and each second mask image, as described above. Specifically, based on each first mask image and each second mask image, the training apparatus may calculate the area of an object X2 in the base synthetic image and the area of the object X2 in an image in which the portion of the object X2 that is hidden by another body in the extracted synthetic image has been removed, and calculate the percentage of the part of the object X2 that is hidden by another body in the entire image of the object X2. Conversely, the training apparatus may calculate the percentage of the part of the entire image of the object X2 that is visible and not hidden by another body. The training apparatus may associate the calculated percentages with the recognition targets 62 and 64 as annotation data.

By calculating the area of the parts hidden by another body based on three-dimensional modeling data of a plurality of objects, the accuracy of calculating the percentage of the part of the object that is hidden by another body in the entire image of the object can be improved. In other words, the accuracy of the annotation data is improved. By increasing the accuracy of the annotation data, the accuracy of estimating visibility by the trained model 30 generated by performing learning using the annotation data as training data is improved.

As described above, the annotation data may be generated by, for example, calculating the percentage of the part of the object hidden by another body in the training image, or the percentage of the part of the object that is cut off from the training image, based on the base synthetic image and the extracted synthetic image. The generated annotation data is then used as training data together with the extracted synthetic image.
By performing learning, the accuracy of visibility estimation by the generated trained model 30 is improved. The training apparatus may calculate both the percentage of the part of the object that is hidden by another body and the percentage of the part of the object that is cut off from the training image.

In the above, based on three-dimensional modeling data of the plurality of objects, the part of an object that is hidden by other bodies or the part that is cut off is calculated from each first mask image of each object, rendered so that the plurality of objects is arranged in the same manner as in the base synthetic image, and each second mask image of each object, rendered so that the plurality of objects is arranged in the same manner as in the extracted synthetic image, but the present disclosure is not limited to this. That is, for example, instead of generating each first mask image, the portion of an object that is hidden by another body or the portion that is cut off may be calculated from each second mask image of each object that is rendered so that the plurality of objects is arranged in the same manner as in the extracted synthetic image. In this case, instead of the first mask images, a plurality of third mask images may be generated, based on the three-dimensional modeling data of the plurality of objects, for the case in which the objects are arranged in the same orientation as each object in the extracted synthetic image. At this time, the third mask image is generated so that it is not hidden by another body and is not cut off. Then, based on each of the second mask images and each of the third mask images, the portion of the object that is hidden by another body or is cut off may be calculated.

In the above example, an image is generated and the portion of an object that is hidden by another body or is cut off is calculated, but it is not necessary to generate image data. In this case, for example, it is possible to generate only the second mask image, and instead of the third mask image, a simulation may be performed, based on the three-dimensional modeling data of the plurality of objects, in which the objects are arranged in the same orientation as each object in the extracted synthetic image, and the area of the objects that are not hidden by another body and are not cut off may be calculated as the result of the simulation.

In the above, each second mask image is generated in a state in which a portion of the object that is hidden by another body or is cut off is missing. Each second mask image may be in a state in which a portion of the object that is hidden by another body or cut off is not missing. Based on the overlapping relationship of each object, the area of each second mask image in a missing state may then be calculated by simulation.

The images used in the training apparatus may include base synthetic images or extracted synthetic images, RGB images or monochrome images, and mask images. The training apparatus may also calculate the percentage of the part of the object that is visible in the extracted synthetic image out of the entire image of the object, based on the number of pixels in the image of the object.

The training apparatus may acquire, as the training image, a mask image of the object that is generated based on an image of the object. The training apparatus may also acquire the ratio of the range of the mask image of the object to the range of the overall mask of the object as the annotation data. The training apparatus may perform learning to generate a trained model 30 based on the mask image and the annotation data.

The training apparatus may acquire an image of the object and an overall mask of the object, generate a mask image based on the image of the object, and calculate the percentage of the area of the mask image to the overall mask as the annotation data.

Although an example in which the annotation data is generated by the training apparatus has been described above, the annotation data can also be prepared by a user of the trained model 30, or the like. That is, the user may directly input the visible percentage of each object in the image.

When generating the feature extractor 31 and the classification generator 34, the training apparatus acquires, as annotation data, correct label information indicating what the objects appearing in the training images are. The feature extractor 31 and the classification generator 34 can then be generated by inputting the training images into the feature extractor 31 and the classification generator 34 and performing learning so that the obtained classification results match the correct label information. The mask generator 32 may generate masks by determining the outer edge of each body having the features extracted by the feature extractor 31.

When generating the generation accuracy estimator 35, the training apparatus acquires, as annotation data, correct mask information in which the contours extracted from the modeling data of each object appearing in the training image are converted into mask data. The generation accuracy estimator 35 can then be generated by inputting the training images into the feature extractor 31 and the mask generator 32 and performing learning so that the resulting masks match the correct mask information.

The training apparatus may acquire an image of the work target 8 of the robot 10 as an image of the object used as training data. That is, the training data may include an image of the work target 8 of the robot 10 as an image of the object. The trained model 30 generated by performing learning using an image of the work target 8 as training data may output the mask and visibility of the work target 8 to the robot control apparatus 20. The robot control apparatus 20 may control the robot 10 based on the mask and visibility of the work target 8 outputted from the trained model 30.

### <Example of operation of the robot control apparatus 20 based on output of the trained model 30>

As described above, the trained model 30 outputs masks from the mask generator 32 and outputs visibility scores from the visibility estimator 33. The robot control apparatus 20 selects the work target 8 to be held by the robot 10 based on the visibility scores outputted from the trained model 30. The robot control apparatus 20 determines the position or orientation in which the work target 8 is held by the hand 14 of the robot 10 based on the mask, outputted from the trained model 30, corresponding to the selected work target 8.

A work target 8 with a high visibility score is likely to be located closer to the user than other bodies. By selecting a work target 8 with a high visibility score, the robot control apparatus 20 can reduce the risk of failure of the robot 10 to hold the work target 8.

In a case in which the trained model 30 includes the classification generator 34, the classification generator 34 outputs a classification score. The robot control apparatus 20 may select the work target 8 to be held by the robot 10 based on the visibility score and the classification score. The robot control apparatus 20 may calculate the product of the visibility score and the classification score and select a body with a large calculated value as the work target 8. The higher the score calculated as the product of the visibility score and the classification score for a body, the better the classification of that body with other bodies, and the greater the visible portion within the full view of the body.

In a case in which the trained model 30 includes the generation accuracy estimator 35, the trained model 30 outputs a generation accuracy score from the generation accuracy estimator 35. The robot control apparatus 20 may select the work target 8 to be held by the robot 10 based on the visibility score and the generation accuracy score. The robot control apparatus 20 may calculate the product of the visibility score and the generation accuracy score, and select a body with a large calculated value as the work target 8. The higher the score calculated as the product of the visibility score and the generation accuracy score for a body, the better the recognition of the body, and the greater the visible portion within the full view of the body.

The robot control apparatus 20 may select the work target 8 to be held by the robot 10 based on the visibility score, the classification score, and the generation accuracy score. The robot control apparatus 20 may calculate the product of the visibility score, the classification score, and the generation accuracy score, and select a body with a large calculated value as the work target 8. The higher the score calculated as the product of the visibility score, the classification score, and the generation accuracy score for a body, the better the classification of that body with other bodies, the better the recognition of the body, and the greater the visible portion within the full view of the body.

The trained model 30 may be configured to output the visibility score, the classification score, and the generation accuracy score separately. The trained model 30 may be configured to output the product of the visibility score, the classification score, and the generation accuracy score. The trained model 30 may be configured to output at least one of the product of the visibility score and the classification score, and the product of the visibility score and the generation accuracy score.

In a case in which the trained model 30 outputs an evaluation score such as the visibility score, the classification score, and the generation accuracy score, the robot control system 1 may further include a display apparatus, and the display apparatus may display the evaluation score as the basis for selecting a specific work target. The evaluation score may be displayed for each work target 8 appearing in the image. The evaluation score may be displayed superimposed on the image of each work target 8. The evaluation score may be displayed as, for example, one of the visibility score, the classification score, and the generation accuracy score, or as an integrated score that takes into account a plurality of scores among the visibility score, the classification score, and the generation accuracy score, depending on user input. The display apparatus can display not only the integrated score but also data outputted by the robot control apparatus 20, the trained model 30, and each component of the robot control system 1. The display apparatus may have a similar configuration to the display device.

As described above, the trained model 30 of the present disclosure can determine the visibility of a body and can improve the performance or reliability of object recognition processing. By selecting the work target 8 taking into consideration the visibility of bodies, the robot control apparatus 20 that includes the trained model 30 can reduce the risk of failure of the robot 10 to hold the work target 8.

### (Example of procedures for generating trained model 30)

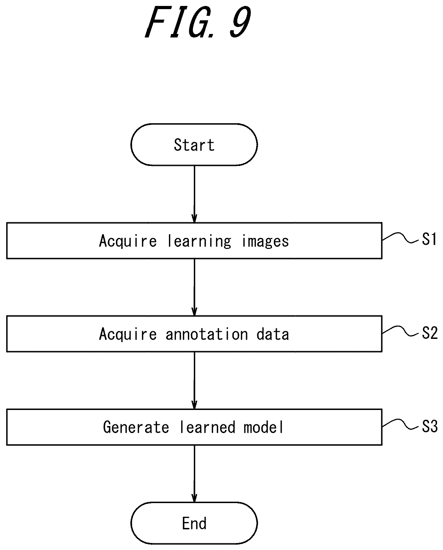

The training apparatus may execute a method of generating the trained model 30, the method including the steps of the flowchart illustrated in FIG. 9. The method of generating the trained model 30 may be realized as a program for generating the trained model 30 that is executed by a processor constituting the training apparatus. The program for generating the trained model 30 may be stored on a non-transitory computer readable medium.

The training apparatus acquires training images (step S1). The training apparatus acquires each piece of annotation data required to generate the trained model 30 for the objects appearing in the training images (step S2). The training apparatus generates the trained model 30 by performing learning using the training data including the annotation data and the training images acquired in step S2 (step S3). After executing the procedure of step S3, the training apparatus ends the execution of the procedures in the flowchart in FIG. 9.

### (Example procedures of robot control method)

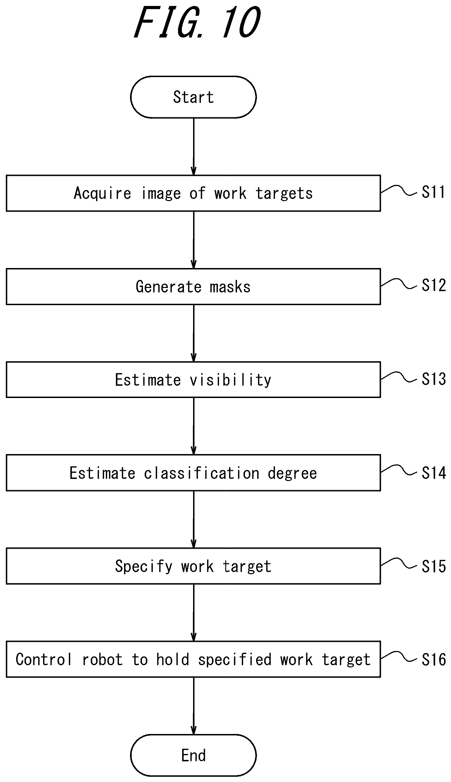

The robot control apparatus 20 may execute a robot control method illustrated in FIG. 10 to control the robot 10. The robot control method may be realized as a robot control program executed by a processor forming part of the robot control apparatus 20. The robot control program may be stored on a non-transitory computer readable medium.

The robot control apparatus 20 acquires an image of the work target 8 (step S11). The robot control apparatus 20 generates a mask of the work target 8 based on the image of the work target 8 (step S12). The robot control apparatus 20 estimates the visibility of the work target 8 (step S13). The robot control apparatus 20 estimates the classification degree of the work target 8 (step S14). The robot control apparatus 20 identifies the work target 8 to be held by the hand 14 of the robot 10 based on the visibility of the work target 8 (step S15). The robot control apparatus 20 controls the robot 10 to hold the specific work target, identified in the procedure of step S15, with the hand 14 of the robot 10 (step S16). After executing the procedure of step S16, the robot control apparatus 20 ends the execution of the procedure of the flowchart in FIG. 10.

### (Summary)

As described above, in the robot control system 1 according to the present embodiment, the robot control apparatus 20 calculates a score from an image of a plurality of work targets 8, taking into consideration the visibility of each of the work targets 8. The robot control apparatus 20 selects a specific work target based on a score that takes into consideration visibility, and controls the robot 10 to hold the specific work target with the hand 14 of the robot 10. By selecting a specific work target based on a score that takes visibility into consideration, the risk of failure of the robot 10 to hold the work target 8 with the hand 14 is reduced. In other words, the score calculated for the work target 8 correlates with the probability of success in holding the work target 8. As a result, the usefulness of the score calculated for the work target 8 is improved.

### (Other embodiments)

Other embodiments are described below.

The trained model 30 may perform object recognition on a plurality of irregularly shaped bodies as work targets 8. The trained model 30 may estimate the visibility of each body based on an image of a plurality of irregularly shaped bodies. As a result, it is possible to have each robot selectively grasp a body having a certain visibility and a certain area, or to inspect or evaluate whether a plurality of irregularly shaped bodies have a certain area.

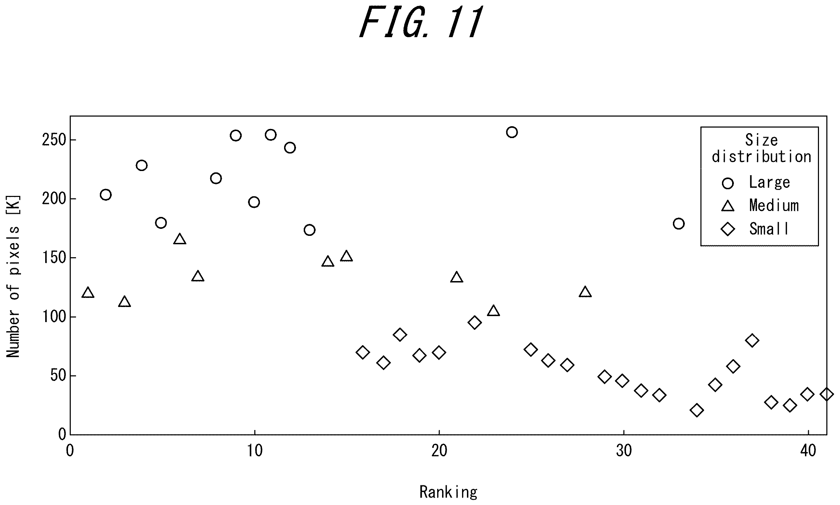

The trained model 30 may generate a plurality of masks for each irregularly shaped body. The trained model 30 may calculate the number of pixels in at least one of the plurality of masks for each of the plurality of bodies. The estimator 24 may calculate an identification number for identifying each mask or each body and the number of pixels of each mask, as illustrated in the graph of FIG. 11, and display this information on a display device or a display apparatus. In the graph of FIG. 11, the vertical axis represents the number of pixels in k (kilo). For example, a display of 100 for the number of pixels indicates that the number of pixels is 100,000 (100k). The horizontal axis indicates the number assigned to each mask or each body. In this way, the user of the trained model 30 can know the results of object recognition, inspection, or the like.

The trained model 30 may calculate the area of a body if the entire image of the body were visible, based on the visibility of the object. For example, if the visibility of a body is 50%, twice the number of pixels of the mask corresponds to the area if the entire image of the body were visible.

The trained model 30 may classify the size of each mask into three categories: small, medium, and large. The number of mask size categories is not limited to three, but may be two, or may be four or more.

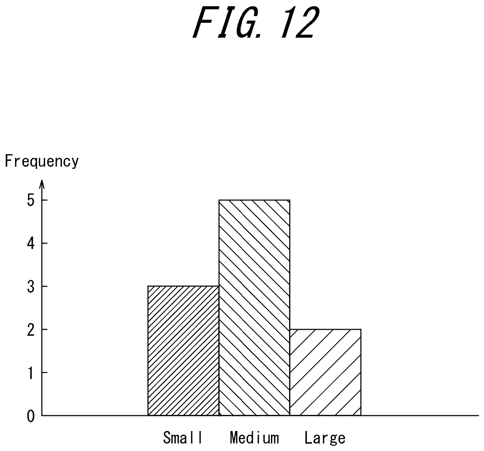

As illustrated in FIG. 12, a histogram of the size of each irregularly shaped body or mask of each body may be generated and displayed on a display device or display apparatus. As a result, the user of the trained model 30 can know the results of object recognition, inspection, or the like.

The sizes constituting the histogram may be the estimated area if the entire image of the body were visible based on the visibility of the body, or may be the area in the actual image. In a case in which a histogram is generated using a mask for each body based on the area in an actual image, the size of the mask for a body that is overlapped by another body will be smaller than the size of the mask for a body that is not overlapped by another body and is completely visible. By extracting and statistically processing only the mask sizes of bodies that are estimated to be completely visible without being overlapped by another body, the size distribution of all bodies, including bodies located below the overlap, can be statistically estimated.

In addition to the above processes, various other processes can be performed. For example, after generating a mask for each body, the trained model 30 may assign each mask a ranking number determined based on the level of visibility and display the ranking number on a display device or display apparatus. As a result, the user of the trained model 30 can know the results of object recognition, inspection, or the like.

An embodiment of the robot control system 1 has been described above, the present disclosure can also be embodied as a method or program for implementing a system or device, as well as a storage medium on which a program is recorded (for example, an optical disk, a magneto-optical disk, a CD-ROM, a CD-R, a CD-RW, a magnetic tape, a hard disk, or a memory card).

The implementation form of the program is not limited to application programs such as object code compiled by a compiler or program code executed by an interpreter, but may also be in the form of a program module incorporated into an operating system. Furthermore, the program may or may not be configured so that all processing is performed solely by the CPU on the control board. The program may be configured so that part or all of the processing is executed by a separate processing unit mounted on an expansion board or expansion unit added to the substrate as needed.

While embodiments of the present disclosure have been described with reference to the drawings and examples, it should be noted that various modifications and revisions may be implemented by those skilled in the art based on the present disclosure. Accordingly, such modifications and revisions are included within the scope of the present disclosure. For example, functions or the like included in each component or the like can be rearranged without logical inconsistency, and a plurality of components or the like can be combined into one or divided.

All of the constituent elements described in the present disclosure and/or all of the steps of all of the methods or processes disclosed herein may be combined in any way, except combinations in which these features are mutually exclusive. Furthermore, each feature described in the present disclosure may be replaced by an alternative feature serving the same, equivalent, or similar purpose, unless expressly stated otherwise. Thus, unless expressly stated otherwise, each disclosed feature is one example only of a generic series of identical or equivalent features.

Furthermore, embodiments of the present disclosure are not limited to the specific configurations of any of the above-described embodiments. Embodiments of the present disclosure may extend to any novel feature or combination of features described herein, or any novel step or combination of steps of the methods or processes described herein.

### REFERENCE SIGNS LIST

1 Robot control system
6 Destination
7 Source
8 Work target
10 Robot (12: arm, 14: hand, 16: camera, 18: interface)
20 Robot control apparatus (22: acquisition interface, 24: estimator, 26: work target specifier, 28: interface)
30 Trained model (31: feature extractor, 32: mask generator, 33: visibility estimator, 34: classification generator, 35: generation accuracy estimator)
41 to 44 Recognition target (41F to 44F: bounding box, 40M to 44M: mask, 42A, 42B: part)
51, 52 Range
53 Virtual camera
61 to 65 Recognition target (62A, 62B, 63A, 64A, 64B, 65A: part)

## Claims

1. A robot control apparatus comprising:
an acquisition interface configured to acquire an image of a plurality of work targets of a robot;
an estimator configured to estimate a visibility of each of the plurality of work targets based on the image; and
a work target specifier configured to select a specific work target for the robot from among the plurality of work targets based on the visibility.

2. The robot control apparatus according to claim 1, wherein the estimator is capable of estimating a classification degree of each of the plurality of work targets from the image, and
the work target specifier selects the specific work target based on the visibility and the classification degree.

3. The robot control apparatus according to claim 1 or 2, wherein the estimator is capable of estimating height information of the plurality of work targets from the image, and
the work target specifier selects the specific work target based on the visibility and the height information.

4. The robot control apparatus according to claim 3, wherein the estimator estimates the height information based on an area of each of the plurality of work targets included in the image.

5. A robot control system comprising the robot control apparatus according to any one of claims 1 to 4 and a display apparatus, wherein
the display apparatus is configured to display a score indicating a basis for selection of the specific work target selected by the robot control apparatus.

6. A trained model comprising:
a feature extractor configured to extract features of each of a plurality of objects based on an image of the plurality of objects;
a mask generator configured to generate a plurality of masks respectively representing the plurality of objects based on the features of each of the plurality of objects; and
a visibility estimator configured to estimate a visibility of each of the plurality of objects based on the plurality of masks.

7. The trained model according to claim 6, further comprising a classification generator configured to classify each of the plurality of objects based on the features.

8. The trained model according to claim 6 or 7, further comprising a generation accuracy estimator configured to estimate generation accuracy of each of the plurality of masks based on the plurality of masks.

9. A method of generating a trained model, comprising performing learning to generate a trained model that estimates a visibility of a body appearing in an inference image when the inference image is input, based on training data including a plurality of training images of objects.

10. The method of generating a trained model according to claim 9, further comprising:
acquiring a synthetic image as the training image;
acquiring a percentage, of a part of an entire image of the object, that is visible in the synthetic image as annotation data; and
performing learning to generate the trained model based on the synthetic image and the annotation data.

11. The method of generating a trained model according to claim 10, wherein the annotation data is calculated based on a percentage of a part the object that is hidden by another body.

12. The method of generating a trained model according to claim 10 or 11, wherein the annotation data is calculated based on a percentage of a part of the object that extends beyond an angle of view of the synthetic image.

13. The method of generating a trained model according to any one of claims 10 to 12, wherein the annotation data is calculated based on a number of pixels in a portion of the object that is visible in the synthetic image.

14. The method of generating a trained model according to claim 9, further comprising:
acquiring a mask image of the object as the training image;
acquiring a ratio of a range of a mask image of the object to a range of a correct mask of the object as annotation data; and
performing training to generate the trained model based on the mask image and the annotation data.

15. The method of generating a trained model according to any one of claims 9 to 14, wherein
the training data includes an image of a work target of a robot as an image of the object, and
the trained model outputs a mask and a visibility of the work target to a robot control apparatus that controls the robot based on the mask and the visibility of the work target.
